Europäisches Patentamt

European Patent Office

Office européen des brevets

(11) Publication number: **0 046 892**
A1

# EUROPEAN PATENT APPLICATION

(21) Application number: **81106099.5**

(22) Date of filing: **04.08.81**

(51) Int. Cl.³: **B 60 N 1/00**
**A 47 C 7/46**

(30) Priority: **29.08.80 JP 122791/80 U**

(43) date of publication of application:
**10.03.82 Bulletin 82/10**

(84) Designated Contracting States:
**DE FR GB**

(71) Applicant: **NISSAN MOTOR COMPANY, LIMITED**
**No.2, Takara-cho, Kanagawa-ku**
**Yokohama City(JP)**

(72) Inventor: **Maeda, Kouzo**
**No. 8-44-9, Sugita**
**Isogo-ku Yokohama City(JP)**

(74) Representative: **Patentanwälte Grünecker,**
**Dr.Kinkeldey Dr.Stockmair, Dr.Schumann,Jakob,**
**Dr.Bezold Meister, Hilgers, Dr.Meyer-Plath**
**Maximilianstrasse 43**
**D-8000 München 22(DE)**

(54) A lightweight seat having a lumbar supporter.

(57) In a simply constructed seat back comprising a generally rectangular frame, a resilient flexible sheet (36) suspended within the frame and a decorative skin member covering the entire of the frame and the sheet (36), a lumbar supporter (54) constructed of an elastomeric material is integrally mounted to the sheet (36) for forming on the skin member a swelling which supports the lumbar area of a seated occupant.

FIG.2

# A LIGHTWEIGHT SEAT HAVING A LUMBAR SUPPORTER

## BACKGROUND OF THE INVENTION

### 1. Field of the Invention

The present invention relates to a seat, and more particularly to a lightweight vehicle seat having a lumbar supporter at its seat back.

### 2. Description of the Prior Art

Hitherto, in order to improve the fuel economy of a motor vehicle, many attempts have been taken particularly in reducing the weight of the vehicle. One of them is to reduce the weight of a seat mounted in the vehicle. In fact, there has been proposed many kinds of lightweight vehicle seats. However, some of them fail to give the passenger on the seat a comfortable sitting due to their inherent constructions.

## SUMMARY OF THE INVENTION

It is therefore an essential object of the present invention to provide an improved lightweight seat which gives the passenger thereon a comfortable sitting.

It is an object of the present invention to provide a seat having a seat proper and a seat back standing on the seat proper, in which the seat back comprises a generally rectangular frame, a resilient flexible sheet suspended within the frame, a decorative skin member covering the entire of the frame and the resilient flexible sheet, and a lumbar supporter mounted to the sheet for forming on the skin member a swelling which supports the lumbar area of a seated occupant.

SUMMARY OF THE DRAWINGS

Other objects and advantages of the present invention will become apparent from the following description when taken in conjunction with the accompanying drawings, in which:

Fig. 1 is a front view of a seat of a first embodiment of the present invention, the seat having a lumbar supporter at its seat back;

Fig. 2 is a perspective view of the seat back of Fig. 1;

Fig. 3 is a sectional view taken along the line III-III of Fig. 2;

Fig. 4 is a sectional view taken along the line IV-IV of Fig. 2;

Fig. 5 is a view similar to Fig. 2, but shows a second embodiment of the present invention;

Fig. 6 is a sectional view taking along the line VI-VI of Fig. 5;

Fig. 7 is a sectional view of an operating mechanism employed in the second embodiment, the mechanism being shown assuming a locked condition;

Fig. 8 is a sectional view taken along the VIII-VIII of Fig. 7; and

Fig. 9 is a view similar to Fig. 7, but showing an unlocked condition of the operating mechanism.

DETAILED DESCRIPTION OF THE INVENTION

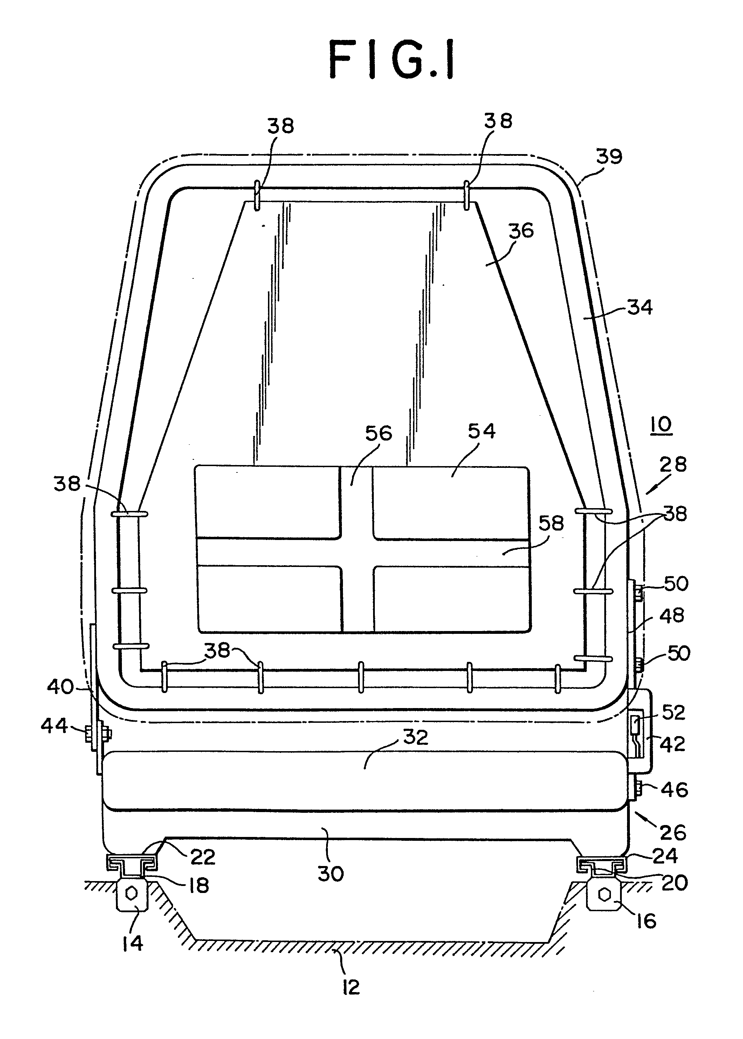

Referring to Figs. 1 to 4, particularly Fig. 1, there is shown a vehicle seat 10 of a first embodiment of the present invention, which is mounted in a vehicle body having a floor panel 12.

As is seen from Fig. 1, the seat 10 is mounted on the floor panel 12 through a sliding mechanism which permits a sliding movement of the seat 10 in a fore-and-aft direction relative to the floor panel 12. Two spaced elongte brackets 14 and 16, for mounting thereon the sliding mechanism, are securely mounted on the floor panel 12 to extend in a direction parallel with the longitudinal axis of the vehicle. The sliding mechanism comprises a pair of lower rails 18 and 20 securely mounted on the brackets 14 and 16 respectively, and a pair of upper rails 22 and 24 longitudinally slidably disposed on the lower rails 18 and 20, respectively. Although not shown in the drawing, a known locking device is associated with the sliding mechanism to lock the stationary upper rails 22 and 24 at a desired position relative to the lower rails 18 and 20.

The seat 10 generally comprises a seat proper 26 and a seat back 28 which is tiltable relative to the seat proper 26. The seat proper 26 comprises a rectangular frame 30 securely mounted on the upper rails 22 and 24 of the sliding mechanism. A seat cushion member 32 is mounted on the frame 30 to form a known seat proper. The seat back 28 comprises a rectangular frame 34 pivotally supported on the seat proper 26, a resilient flexible elastomeric sheet 36 (such as a rubber sheet) suspended within the frame 34 by a plurality of clips 38, and a decorative skin member 39 covering the entire of the frame 34 and the sheet 36.

For achieving the pivotal movement of the seat back 28 relative to the seat proper 26, a hinge device 40 and a tilting device 42 are arranged between them. The hinge device 40 comprises a stationary arm (no numeral) secured to the seat proper frame 30, a movable arm (no numeral) secured to the seat back frame 34, and a bolt 44 pivotally connecting these arms. Although now well shown in the drawing, the tilting device 42 comprises a stationary base secured by bolts 46 to the seat proper frame 30, and a movable arm 48 which is tiltable to the base and secured by bolts 50 to the seat back frame 34. A known locking device is associated with the tilting device 42 to lock the seat back 28 at a desired angular position relative to the seat proper 26. The operation lever of the tilting device is designated by numeral 52.

According to the present invention, a lumbar supporter is mounted to the seat back 28 for giving the seated occupant a sitting comfort.

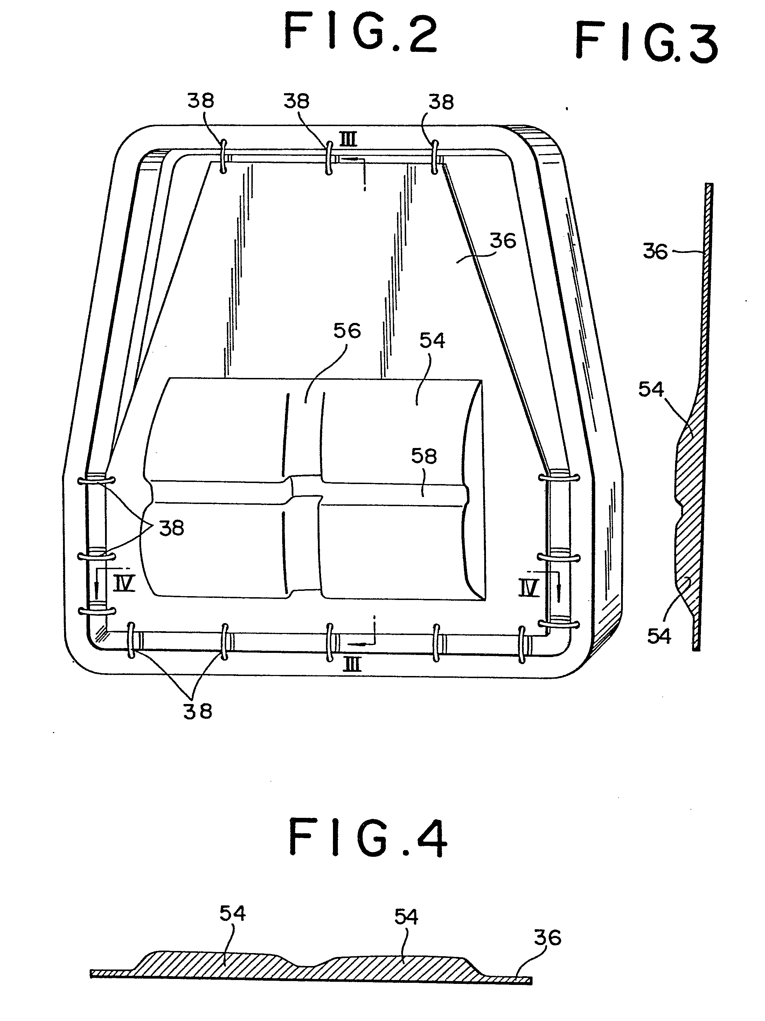

As is best shown in Fig. 2 which omits the decorative skin member for clarification, a generally semicylindrical member 54 (which is a lumbar supporter) is transversely and integrally mounted to the seat back sheet 36 at a portion where the lumbar area of the seated occupant is to be positioned. The lumbar supporter 54 is constructed of an elastomeric material such as a foamed polyurethane. As shown, the lumbar supporter 54 is divided into four sections by two center grooves 56 and 58 which run lengthwise and breadthwise respectively.

With the lumbar supporter 54 mounted on the seat back sheet 36, the skin member 39 is compelled to form thereon a swelling by which the seated occupant is given with a sitting comfort. The lightweight characteristic is hardly affected by the lumbar supporter 54 because of its simple and light weight construction.

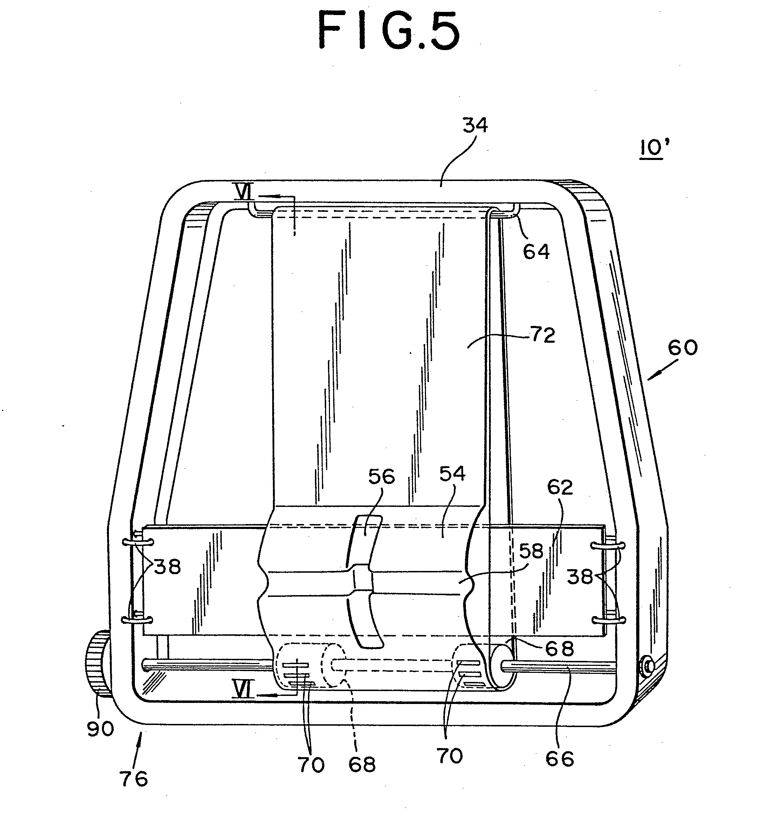

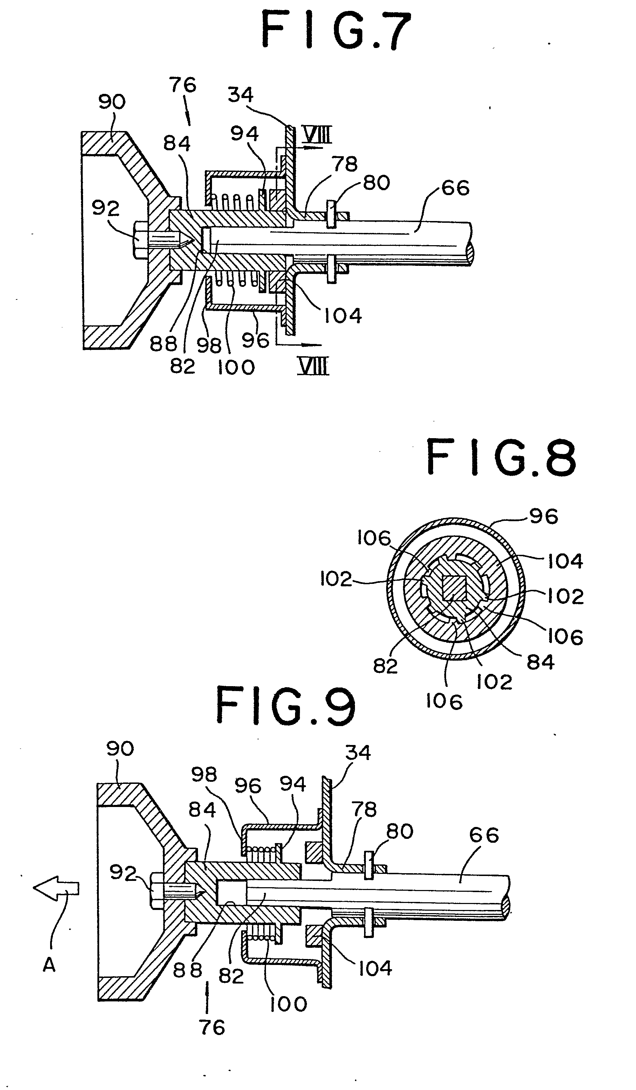

Referring to Figs. 5 and 9, particularly Fig. 5, there is shown a second embodiment 10 of the present invention. Since the construction of the seat proper is substantially the same as that of the first embodiment of Fig. 1, it is omitted from the drawing.

The seat back 60 of this second embodiment 10' comprises a rectangular frame 34 pivotally supported on the seat proper (not shown), and a rectangular resilient flexible sheet 62 suspended within a lower portion of the frame 34 by clips 38. As will become clear as the description proceeds, a lumbar supporter of this second embodiment moves upward and downward into a desired position suitable for effectively supporting the lumbar area of the seated occupant.

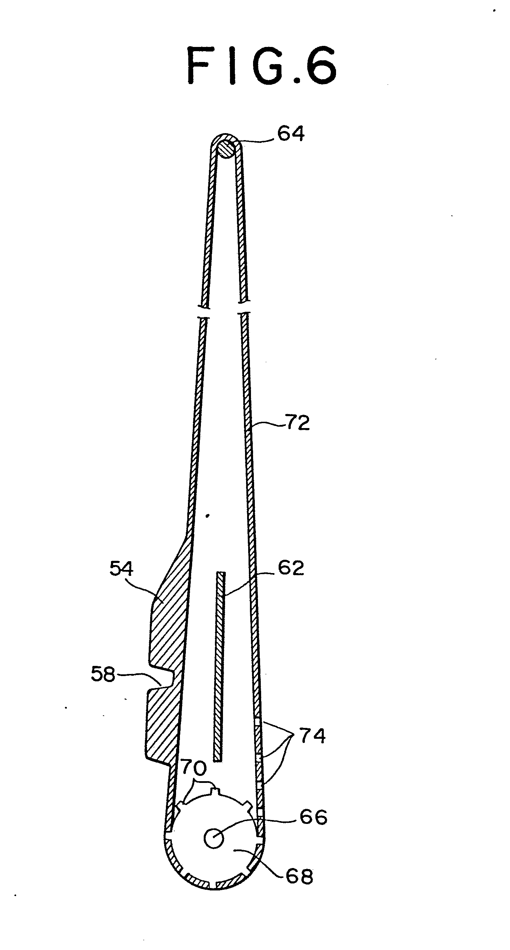

As is seen from Fig. 5, an elongate guide member 64 is fixed at its bent ends to the upper section of the seat back frame 34 in a manner to form a clearance therebetween. An elongate shaft 66 is spanned between opposed lower sections of the frame 34 to be parallel with the major portion of the elongate guide member 64. The shaft 66 is rotatable about the axis thereof relative to the frame 34. A pair of spaced rollers 68 are coaxially and securely mounted on the rod 66 to be rotatable therewith. Each of the rollers 68 has equally spaced parallel projections 70 at its cylinderical outer surface. An endless sheet 72 constructed of a resilient flexible material is spanned between the rollers 68 and the elongate guide member 64 to pass thereon. As is seen from Fig. 6, the sheet 72 is formed at its lateral side portions with two rows of parallel openings 74 which are in engagement with the projections 70 of the rollers 68 in one to one relation, so that the rotation of the shaft 66 about the axis thereof induces certain movement of the sheet 72 around the shaft 66 and the guide member 64. Similar to the first embodiment of Fig. 1, a generally semicylindrical member 54 of elastomeric material is transversely and integrally mounted to the sheet 72 to be movable therewith.

A manual operating device 76 is employed for placing the lumbar supporter 54 at any desired positions. The device 76 is arranged at the lefthand section of the shaft 66. As is well shown in Fig. 7, the operating device 76 comprises a bearing portion 78 formed on the seat back frame 34, by which one end of the rod 66 is rotatably supported. A spring washer 80 held by the bearing portion 78 holds the shaft 66 to prevent axial dislocation of the shaft 66. The end of shaft 66 is formed with a rectangular extension 82 which is projected axially outwardly from the bearing portion 78. A cylindrical holder 84 having a rectangular blind hole 88 is telescopically connected to the rectangular extension 82 with the hole 88 slidably receiving therein the extension 82. The shape of the blind hole 88 matches with that of the extension 82, so that a rotation of the cylindrical holder 84 about the axis thereof induces synchronous rotation of the shaft 66, while an axial displacement of the member 84 relative to the shaft 66 is freely permitted. A knob 90 is firmly fixed to the holder 84 by a bolt 92. The holder 84 is formed with a circular flange 94 which acts as a spring seat. A cylindrical cover 96 having an apertured end wall 98 is fixed to the seat back frame 34 to cover the major portion of the cylindrical holder 84. A coil spring 100 is disposed about the holder 84 and compressed between the flange 94 and the apertured end wall 98 so as to bias the holder in the rightward direction in Fig. 7. As will be understood from Fig. 8, the open end of the cylindrical holder 84 is formed at its outer surface with six equally spaced projections 102. A ring 104 is fixed to the outer surface of the seat back frame 34 in a manner to be coaxial with the bearing portion 78. The ring 104 is formed at its cylindrical inner surface six equally spaced projections 106 which are lockingly engageable with the projections 102 of the cylindrical holder 84. Under a condition as shown in Fig. 7 wherein the holder 84 takes its rightmost position by the action of the spring 100, the holder 84 and thus the shaft 66 are locked against rotation. However, when the knob 90 is pulled manually in the direction of the arrow A against the force of the spring 100, as shown by Fig. 9, the locking engagement between the holder 84 and the stationary ring 104 is concelled thereby permitting free rotation of them.

Operation of the adjustable lumbar supporter of the second embodiment will be described with reference to Figs. 5, 7 and 9.

When an adjustment is required for placing the lumbar supporter 54 at a position suitable for effectively supporting the lumbar area of the seated passenger, the knob 90 is pulled in the leftward direction (Fig. 9) to cancel the locking engagement between the holder 84 and the stationary ring 104. With the knob 90 being pulled, the knob 90 is rotated about the axis thereof in a desired direction, so that the shaft 66 rotates moving the endless sheet 72 and thus the lumbar supporter 54 upward or downward to the desired position. When the knob 90 is released after setting the desired position of the lumbar supporter 54, the holder 84 shifts rightward by the action of the spring 100 and is brought into locking engagement with the stationary ring 104. Thus, now, the holder 84 and the shaft 66 are locked against rotation, so that the lumbar supporter 54 is locked at the selected position.  In this manner, the lumbar supporting position is arbitrarily adjusted in accordance with the body size and the sitting posture of the seated occupant.

WHAT IS CLAIMED IS:

1.   A seat having a seat proper and a seat back standing on said seat proper, said seat back comprising:

a generally rectangular frame;

a resilient flexible sheet suspended within said frame;

a decorative skin member covering the entire of said frame and said resilient flexible sheet; and

a lumbar supporter mounted to said sheet for forming on said skin member a swelling which supports the lumbar area of a seated occupant.

2.   A seat as claimed in Claim 1, in which said sheet and said lumbar supporter are constructed of an elastomeric material and integrated with each other.

3.   A seat as claimed in Claim 2, in which said lumbar supporter is semicylindrical in shape and transversely mounted on said sheet.

4.   A seat as claimed in Claim 3, in which said lumbar supporter is divided into four sections by two center grooves which run lengthwise and breadthwise, respectively.

5.   A seat as claimed in Claim 4, in which said sheet is suspended within the frame by a plurality of clips.

6.    A seat as claimed in any one of Claims 1 to 4, further comprising a lumbar supporter adjusting means for adjusting the position of said lumbar supporter to effectively support the lumbar area of the seated occupant.

7.    A seat as claimed in Claim 6, in which said resilient flexible sheet is of an endless sheet, and in which said adjusting means comprising:

a guide member fixed to an upper section of said frame;

a shaft spanned between opposed lower sections of said frame and rotatable about the axis thereof relative to said frame; and

an operating device for selectively rotating and locking said shaft,

wherein the endless sheet having thereon said lumbar supporter passes on both said guide member and said shaft so that rotation of said shaft induces movement of said sheet and thus said lumbar supporter around them.

8.    A seat as claimed in Claim 7, in which said adjusting means further comprises rollers which are coaxially mounted on said shaft with the outer cylindrical surfaces contacting with the sheet.

9. A seat as claimed in Claim 8, in which each of said rollers is formed at its cylindrical outer surface with equally spaced projections, and in which said shaft is formed at portions contacting with said rollers with rows of openings which are in engagement with the projections of the rollers in one to one relation.

10. A seat as claimed in Claim 7, in which said operating device comprises:

a knob holder which is connected to an end of said shaft in a manner to transmit the rotation of said holder about the axis thereof to said shaft while freely permitting the axial displacement of said holder relative to said shaft;

locking means for locking said knob holder against the rotation about the axis thereof when said knob holder assumes a given position; and

biasing means for biasing said knob holder to take said given position.

11. A seat as claimed in Claim 7, further comprising

-14-

an additional resilient flexible sheet which is suspended
within a lower portion of said frame by clips in order
to back up said lumbar supporter.

0046892

# FIG.1

0046892

# FIG.2

# FIG.3

# FIG.4

# FIG.5

0046892

# FIG.6

0046892

# FIG.7

# FIG.8

# FIG.9

**0046892**

European Patent Office

**EUROPEAN SEARCH REPORT**

Application number

EP 81 10 6099.5

| | **DOCUMENTS CONSIDERED TO·BE RELEVANT** | | **CLASSIFICATION OF THE APPLICATION (Int. Cl.³)** |
|---|---|---|---|
| Category | Citation of document with indication, where appropriate, of relevant passages | Relevant to claim | |
| P | FR - A1 - 2 460 227 (DAIMLER-BENZ) * page 10, line 21; fig. 9 * | 1,7 | B 60 N 1/00 A 47 C 7/46 |
| P | & DE - A1 - 2 926 552 — | | |
| | DE - B - 1 204 788 (VITAFOAM) * fig. 1 * — | 1 | |
| | DE - A1 - 2 947 472 (STEYR-DAIMLER-PUCH) * fig. 1 * — | 1 | **TECHNICAL FIELDS SEARCHED (Int. Cl.³)** A 47 C 7/00 B 60 N 1/00 |
| | US - A - 3 258 259 (N.I. BOHLIN) —— | 1 | |

**CATEGORY OF CITED DOCUMENTS**

X: particularly relevant

A: technological background

O: non-written disclosure .

P: intermediate document

T: theory or principle underlying the invention

E: conflicting application

D: document cited in the application

L: citation for other reasons

&: member of the same patent family, corresponding document

X The present search report has been drawn up for all claims

| Place of search | Date of completion of the search | Examiner |
|---|---|---|
| Berlin | 24-11-1981 | BECKER |

EPO Form 1503.1 06.78